# EUROPEAN PATENT SPECIFICATION

(11) **EP 2 334 487 B1**
(45) Date of publication and mention of the grant of the patent: **13.02.2013**
(21) Application number: 09737128.0
(22) Date of filing: 09.10.2009
(51) Int. Cl.: B29C 71/00, B29C 71/02

(54) **POLYMERIC MATERIALS**
POLYMERE MATERIALIEN
MATERIAUX POLYMERES

(30) Priority: 16.10.2008 GB 0818967
(43) Date of publication of application: 22.06.2011
(73) Proprietor: Victrex Manufacturing Limited, Tornton Cleveleys Lancashire FY5 4QD (GB)
(72) Inventor: CRAWLEY, Christopher, Warrington Cheshire WA5 2UZ (GB); SANDNER, Horst, D-65529 Waldems (DE); GAUTHIER, Laure, F-79180 Chauray (FR); WOOD, Alan Keith, Penrith Cumbria CA10 1TW (GB)
(74) Representative: Brierley, Anthony Paul
(86) International application number: PCT/GB2009/051354
(87) International publication number: WO 2010/043888

(56) References cited:
- US-A- 4 419 320
- US-A- 4 597 932
- US-A- 5 089 207
- US-A- 5 336 526
- US-A1- 2004 124 562

## Description

This invention relates to polymeric materials and particularly, although not exclusively, relates to forming semi-crystalline polymeric materials into predetermined shapes.

A common method of shaping amorphous polymers is via thermoforming as in documents US-A-5,089,207, US-A-5,336,526, US-A-4,419,320 and US-A-4,597,932. This is a process by which a sheet of amorphous polymer is heated to a temperature above the glass transition temperature (Tg) but below the point at which it could be formed as a melt, deforming the material elastically to define a component and then cooling it down, whilst still deformed, below the Tg. The Tg represents the glassy-rubber transition of the polymeric material and cooling below the Tg restricts segmental molecular movement and hence inhibits the decay of the stress built into the component by the deformation process, the stress effectively being *frozen* into the material. If the component is reheated above the Tg, a significant amount of recovery will occur, the material returning to a state similar to its original form. Similarly, if the component is subjected to a stress such that the stress acts to relieve some of the frozen-in stress, recovery to the deformed dimensions will not be complete on removal of the stress. This lack of complete recovery is related to the visco-elastic characteristics of polymers. Any deformation of a polymer will have recoverable and irrecoverable components, the latter arising due to the movement of molecules relative to one another under applied stress.

Semi-crystalline polymers contain a degree of crystalline material and a degree of amorphous material, the latter often being significant. As a consequence, it is possible to deform such materials in a fashion similar to the amorphous polymers as discussed above. After thermoforming, as with the amorphous polymers, if the material is heated above its Tg, there will be some recovery and a similar behaviour will arise if the material is subject to stress.

There are circumstances where components manufactured in thermoforming processes are subjected to heat and/or stress in use which may detrimentally result in deformation of the shape and/or dimensions of the components, as the amorphous regions of the polymeric material recover to some extent and move back towards their original form.

By way of example, seal rings, made from a polymeric material, are known which are arranged to provide sealing along rotating shafts. Such a ring may have a diameter of about 25mm and in use sits in a groove in the shaft such that the outside diameter of the ring mates with the housing in which the shaft sits. The ring is split in order to allow it to be opened and placed over the shaft. To ensure the integrity of the seal around its complete circumference, a suitable joint, for example comprising interlocking sections, needs to be defined to close the split. The structure of this joint generally means that a split ring is formed with a significant distance between the two joint ends which define the split. After moulding, the split ring may be heat set (effectively a thermoforming process) into the correct shape such that the joint ends are no longer separate. This can be achieved by placing the moulded ring which may typically have a level of crystallinity of 25-35% on a metal shaft and mounting the shaft and ring inside a housing jig, the inside of the jig fixing the outside diameter of the ring. The jig and ring are then heated to a temperature above the T_{g} of the polymeric material and the assembly allowed to cool down whilst the ring is still constrained. The result is that the ring retains the dimensions of the constraining jig once removed from the jig. However opening the ring to mount it onto a shaft results in some non-recoverable deformation such that the ring is no longer a good fit into the housing in the final engineering assembly where it is to be used.

Processes such as injection moulding can often result in levels of residual stress that give rise to intolerable warpage in a finished component, such as a microchip tray. Chip trays are used to transport microchips during processing and flatness is very important. The design of chip trays is very often complex and this complexity readily results in flow related residual stress. Coupled with this, chip trays are often manufactured from polymer compositions which contain fibres and other fillers, the fillers being used to control the dissipation of electrostatic charge. Such fillers, which usually have a high aspect ratio, exacerbate the aforementioned flow related stress.

Scrolls of scroll compressors are composed of relatively small cross-section helical coils made from polymeric material. The scrolls are typically injection moulded but there is a constraint in terms of the flow lengths required in order to fully form the components. This limits the potential combinations of cross-sections and lengths possible (the smaller the cross-section the shorter the length) due to premature freezing of the polymeric material on filling the mould cavity. One other disadvantage of the moulding process is that residual stress is developed which varies along the length of the scroll so that there are dimensional accuracy problems with the scrolls produced. In addition, in the case of fibre filled polymeric materials, the fibre orientation will also change as a function of length. Ideally, fibres should be orientated predominately along the axis of the scroll so as to maximise the properties in this direction. However, this is not the case with a moulded component where distinct skin/core orientation structures are produced.

Thus, as a general point, components which are made by moulding to define a first shape, followed by thermoforming to define a second shape or component which otherwise contains residual stress after moulding may change shape and/or dimensions, in use, when subjected to heat and/or stress.

It is an object of preferred embodiments of the present invention to address the aforementioned problem.

It is also an object of preferred embodiments of the present invention in general to address problems associated with forming semi-crystalline polymeric materials into predetermined shapes.

According to a first aspect of the invention, there is provided a method of forming at least a part of an article in a predetermined shape according to claim 1.

As a consequence of at least said part of said article being restricted to said predetermined shape at the same time as said crystallinity is increased by a significant amount (and suitably through the entirety of the time the crystallinity is increased), the predetermined shape becomes the "normal" state of at least said part of said article, since the crystal structures formed effectively cross-link the polymeric material and "lock" in the predetermined shape. Since the "locks" are crystalline structures, heating above the glass transition temperature (Tg) of the polymeric material will have no effect on the component. Furthermore, application of stress to the article will not affect at least said part of said article, provided the elastic (yield) limit of the material is not reached. To destroy the crystal structures, the polymeric material will need to be melted and, accordingly, any dimensional information locked into the polymeric material should be retained up to temperatures close to the melting point of the polymeric material.

The level and extent of crystallinity in a polymer may be measured by wide angle X-ray diffraction (also referred to as Wide Angle X-ray Scattering or WAXS), for example as described by Blundell and Osborn (Polymer 24, 953, 1983). Alternatively, crystallinity may be assessed by Differential Scanning Calorimetry (DSC) in a process such as the following which is also described in POLYMER Vol. 37, Number 20, 1996, page 4573.

DSC may be used to examine a 10mg plus or minus 10 microgram sample of polymeric material in a TA Instruments DSC Q100 under nitrogen at a flow rate of 40ml/min. The scan procedure may be:
Step 1 Perform and record a preliminary thermal cycle by heating the sample from 30°C to 450°C at 20°C/min, recording the Tg, Tn and Tm.
Step 2 Hold for 2 mins
Step 3 Cool at 10°C/min to 30°C and hold for 5 mins, recording Tc.
Step 4 Heat from 30°C to 450°C at 20°C/min, recording the Tg and Tm.

From the resulting curve the onset of the Tg may be obtained as the intersection of lines drawn along the pre-transition baseline and a line drawn along the greatest slope obtained during the transition. The Tn is the temperature at which the main peak of the cold crystallisation exotherm reaches a maximum. The Tm is the temperature at which the main peak of the melting endotherm reaches a maximum. The Tc is the temperature at which the main peak of the crystallisation from the melt exotherm reaches a maximum.

The Heat of Fusion (ΔH (J/g)) may be obtained by connecting the two points at which the melting endotherm deviates from the relatively straight baseline. The integrated area under the endotherm as a function of time yields the enthalpy (mJ) of the transition, the mass normalised Heat of Fusion is calculated by dividing the enthalpy by the mass of the specimen (J/g). The level of crystallisation (%) is determined by dividing the Heat of Fusion of the specimen by the Heat of Fusion of a totally crystalline polymer, which for polyetheretherketone is 130J/g.

The aforementioned methods provide the level of crystallinity in a bulk sample. As an alternative, FTIR may be used to assess crystallinity and this may be used to assess the level of crystallinity at a surface and/or across the thickness or surface of a sample. Reference is made to a paper titled "Crystallinity in Poly(Aryl-Ether-Ketone) Plaques Studied by Multiple Internal Reflection Spectroscopy" (Polymer Bull, 11, 433 (1984)).

In a preferred embodiment, DSC may be used to measure crystallinity of a bulk sample. FTIR may be used to measure crystallinity at a surface.

It is believed that the greater the increase in the crystallinity in step (c), the greater the locking effect. Crystallinity suitably increases by at least 10%, preferably at least 15%, more preferably at least 20%. Crystallinity may increase by less than 35% or less than 30%.

Said first level of crystallinity of the precursor selected in step (a) may be less than 20%, preferably less than 18%, more preferably less than 16%, especially less than 14%. The first level of crystallinity may be at least 1%, at least 5%, at least 8% or at least 10%.

Said precursor may be made prior to step (a) so that its crystallinity is minimised.

Said precursor may be made in a step (a*) which precedes step (a) and comprises melt processing a thermoplastic composition which includes said thermoplastic polymeric material. Suitably, melt processing comprises extruding or moulding, for example injection moulding, the composition. Preferably, melt processed material is subjected to a cooling means which cools the composition rapidly to minimise the level of crystallinity in said precursor. For example, when said composition is extruded, the extrudate may be contacted with water for example provided in a bath to cool it. The water may be at a temperature of 80°C or less. In the case of moulded precursors, the mould itself may be cold so that injected composition is cooled rapidly on contact with the mould. For example, the mould may be actively cooled, for example water cooled such as to a temperature above ambient temperature but less than about 80°C.

Suitably, restricting said predetermined shape in step (b) includes restricting the size of at least said part of the precursor - i.e. suitably, step (b) involves physically restricting any and all dimension changes of at least said part of said precursor. Thus, step (b) suitably comprises applying a force to the precursor to restrict it to said predetermined shape. Step (b) may comprise restricting the size of at least said part of said precursor in a first direction. Step (b) may comprise applying a force to at least said part of said precursor said force having at least a component in a first direction. Step (b) may comprise restricting the size of at least said part of said precursor in a second direction. Step (b) may comprise applying a force to at least said part of said precursor, said force having at least a component in a second direction. Said second direction is preferably perpendicular to said first direction. Step (b) may comprise restricting the size of at least said part of said precursor in a third direction. Step (b) may comprise applying a force to at least said part of said precursor, said force having at least a component in a third direction. Said third direction is preferably perpendicular to said first and second directions. Thus, the size of at least said part of said precursor may be restricted in step (b) in one, two or three dimensions. Preferably, it is restricted in at least two dimensions, more preferably at least three dimensions.

The precursor selected in step (a) may already be arranged in said predetermined shape (i.e. the shape of the precursor and said predetermined shape may be the same) or the shape of the precursor and said predetermined shape may be different.

When the shape of the precursor and said predetermined shape are the same, the method may be arranged to increase crystallinity whilst maintaining the shape, thereby to lock the shape so that, in use, in the event at least said part of said article is subjected to a stress and/or heat, said predetermined shape will remain substantially dimensionally stable and/or will be dimensionally more stable compared to if steps (b) and (c) were not carried out on said precursor. An example of a precursor which may be treated as aforesaid is a micro-chip tray as hereinafter described.

Where the shape of precursor and said predetermined shape are different, step (b) may comprise deforming said precursor to define said predetermined shape and retaining the precursor in said predetermined shape whilst step (c) is carried out. Examples of precursor which may be treated as aforesaid include precursors for split rings and for scroll compressors as hereinafter described.

An extrusion process may be used to produce extrusions which may subsequently be deformed to define more complex shapes, for example convoluted shapes, such as helices. Such complex shapes include scrolls for scroll compressors. After an extrusion has been produced, it may be cut to define a desired length and then deformed into said predetermined shape and restricted to said predetermined shape in step (b). Step (b) may comprise associating the extrusion with a tool which has the desired profile to define the predetermined shape. Thereafter, the extrusion, in said predetermined shape, may be treated to increase crystallinity in step (c).

A moulding, for example injection moulding process, may be used to produce a precursor for an article which is either already arranged in said predetermined shape or the shape of the precursor and said predetermined shape may be different. An example of the former is a said micro-chip tray; and an example of the latter is a said split ring.

Said article may have a complex, for example convoluted, shape. It may be of a shape which cannot be formed by moulding, for example injection moulding, alone. Said article may comprise a helical shape, a split ring or a micro-chip receptacle, for example tray. A said helical shape may comprise a scroll for a scroll compressor.

Said thermoplastic polymeric material is suitably semi-crystalline and may be such that the kinetics of crystallisation are so fast that it is substantially impossible to produce a solid from the polymeric material which is fully amorphous. For example, the crystallinity half-life (t_{0.5}) of the thermoplastic polymer at 15°C above its Tg may be less than 1000 seconds, less than 500 seconds, less than 250 seconds, or less than 150 seconds determined in accordance with the description in J.Brandrup, E.H.Immergut and E.A.Grulke, Polymer Handbook 4th Edition, Wiley Interscience, 1999, ISBN 0-471-47936-5 (Vol 1) and 0-471-48172-6 (Vol 2*)*.

On the aforementioned basis the t_{0.5} for polyetheretherketone at 160°C (which is close to 15°C above its Tg) is 126 seconds which indicates that crystallisation occurs very rapidly.

Step (c) may comprise heating said thermoplastic material and/or said precursor to a temperature above the Tg of said thermoplastic polymeric material. It may be heated to a temperature of at least 10°C, preferably at least 20°C, more preferably at least 30°C, especially at least 40°C above the Tg. In step (c), said thermoplastic polymeric material is suitably not caused to melt. Step (c) preferably comprises maintaining said thermoplastic polymeric material and/or said precursor at a temperature of less than the melting temperature of said thermoplastic polymeric material and/or said precursor. In step (c), said thermoplastic material and/or said precursor may be maintained at a temperature above the Tg of said thermoplastic polymeric material for at least 10 minutes, preferably at least 20 minutes; more preferably at least 25 minutes.

In step (c), said thermoplastic polymeric material and/or said precursor may be heated to a temperature of at least 160°C, preferably at least 180°C, more preferably at least 190°C (especially where the thermoplastic polymeric material is a polyaryletherketone, for example polyetheretherketone). Said thermoplastic polymeric material and/or said precursor may be maintained at a temperature of at least 160°C, 180°C or 190° for at least 10 minutes, preferably at least 20 minutes, more preferably at least 25 minutes.

In step (c), said thermoplastic polymeric material and/or said precursor may be heated to a temperature which is less than the melting temperature (Tm) and degradation temperature of said thermoplastic polymeric material and/or said precursor. Said temperature to which said thermoplastic polymeric material and said precursor is heated may be at least 10°C, suitably at least 20°C, preferably at least 30°C, more preferably at least 35°C, less than the Tm and/or degradation temperature (whichever is lower) of said thermoplastic polymeric material and/or said precursor.

In step (c), said thermoplastic polymeric material and/or said precursor may be heated to a temperature which is at least 10°C greater than the maximum expected temperature to which the part of the article is subjected in use. This should ensure that no further crystallisation occurs during use of the article.

Step (c) may include slow cooling of the thermoplastic polymeric material and/or said precursor, suitably whilst said at least a part of said precursor is restricted to said predetermined shape. Preferably, said at least a part of said precursor is restricted to said predetermined shape until said precursor has cooled to a temperature below the Tg of said thermoplastic polymeric material.

Said thermoplastic material of at least said part of said article may have a crystallinity after step (c) of at least 25%. The crystallinity may be 35% or less.

Said thermoplastic polymeric material suitably has a Tg of greater than 50°C, preferably greater than 75°C, more preferably greater than 100°C.

Said polymeric material may have a Tg of less than 260°C, for example less than 220°C or less than 200°C. In some cases, the Tg may be less than 190°C, 180°C or 170°C.

Said, polymeric material preferably has a Tg of greater than 50°C, more preferably greater than 80°C,, especially greater than 120°C.

Said polymeric material suitably has a melt viscosity (MV) of at least 0.06 kNsm⁻², preferably has a MV of at least 0.08 kNsm⁻², more preferably at least 0.085 kNsm⁻², especially at least 0.09 kNsm⁻².

MV is suitably measured using capillary rheometry operating at 400°C at a shear rate of 1000s⁻¹ using a tungsten carbide die, 0.5x3.175mm.

Said polymeric material may have a MV of less than 1.00 kNsm⁻², suitably less than 0.5 kNsm⁻², preferably less than 0.38 kNsm⁻², more preferably less than 0.25 kNsm⁻², especially less than 0.12 kNsm⁻².

Said polymeric material may have a tensile strength, measured in accordance with ASTM D790 of at least 40 MPa, preferably at least 60 MPa, more preferably at least 80 MPa. The tensile strength is preferably in the range 80-110 MPa, more preferably in the range 80-100 MPa.

Said polymeric material may have a flexural strength, measured in accordance with ASTM D790 of at least 145 MPa. The flexural strength is preferably in the range 145-180 MPa, more preferably in the range 145-165 MPa.

Said polymeric material may have a flexural modulus, measured in accordance with ASTM D790, of at least 2 GPa, preferably at least 3GPa, more preferably at least 3.5 GPa. The flexural modulus is preferably in the range 3.5-4.5 GPa, more preferably in the range 3.5-4.1 GPa.

Said polymeric material may have a tensile strength, measured in accordance with ASTM D790 of at least 20 MPa, preferably at least 60 MPa, more preferably at least 80 MPa. The tensile strength is preferably in the range 80-110 MPa, more preferably in the range 80-100 MPa.

Said polymeric material may have a flexural strength, measured in accordance with ASTM D790 of at least 50 MPa, preferably at least 100 MPa, more preferably at least 145 MPa. The flexural strength is preferably in the range 145-180MPa, more preferably in the range 145-164 MPa.

Said polymeric material may have a flexural modulus, measured in accordance with ASTM D790, of at least 1 GPa, suitably at least 2 GPa, preferably at least 3 GPa, more preferably at least 3.5 GPa. The flexural modulus is preferably in the range 3.5-4.5 GPa, more preferably in the range 3.5-4.1 GPa.

Said thermoplastic polymeric material may be any such material which has the characteristics described herein. For example, it may be a polyphenylene sulphide (PPS), polyester, such as polyethylene terephthalate (PET) or polybutyleneterephalate, or a polyamide such as nylon.

Said thermoplastic polymeric material may be a polymeric material of a type which includes:
(a) phenyl moieties;
(b) ketone and/or sulphone moieties;
(c) ether and/or thioether moieties.

Preferably, said polymeric material has a moiety of formula 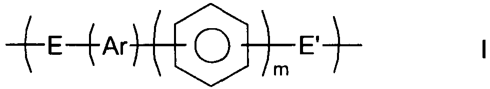 and/or a moiety of formula 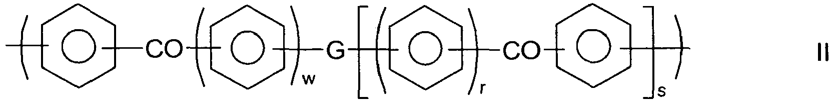 and/or a moiety of formula 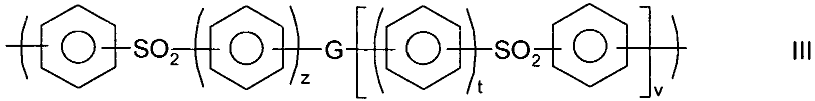 wherein m,r,s,t,v,w and z independently represent zero or a positive integer, E and E' independently represent an oxygen or a sulphur atom or a direct link, G represents an oxygen or sulphur atom, a direct link or a -O-Ph-O- moiety where Ph represents a phenyl group and Ar is selected from one of the following moieties (i)**, (i) to (iv) which is bonded via one or more of its phenyl moieties to adjacent moieties

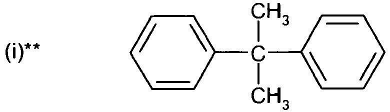

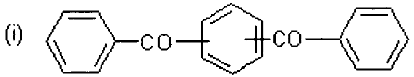

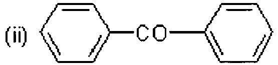

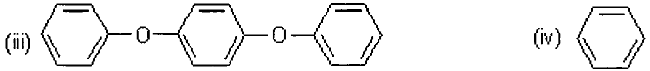

Unless otherwise stated in this specification, a phenyl moiety has 1,4-, linkages to moieties to which it is bonded.

In (i), the middle phenyl may be 1,4-or 1,3-substituted. It is preferably 1,4-substituted.

Said polymeric material may include more than one different type of repeat unit of formula I; and more than one different type of repeat unit of formula II; and more than one different type of repeat unit of formula III. Preferably, however, only one type of repeat unit of formula I, II and/or III is provided.

Said moieties I, II and III are suitably repeat units. In the polymeric material, units I, II and/or III are suitably bonded to one another - that is, with no other atoms or groups being bonded between units I, II and III.

Phenyl moieties in units I, II and III are preferably not substituted. Said phenyl moieties are preferably not cross-linked.

Where w and/or z is/are greater than zero, the respective phenylene moieties may independently have 1,4- or 1,3-linkages to the other moieties in the repeat units of formulae II and/or III. Preferably, said phenylene moieties have 1,4- linkages.

Preferably, the polymeric chain of the polymeric material does not include a -S- moiety. Preferably, G represents a direct link.

Suitably, "a" represents the mole % of units of formula I in said polymeric material, suitably wherein each unit I is the same; "b" represents the mole % of units of formula II in said polymeric material, suitably wherein each unit II is the same; and "c" represents the mole % of units of formula III in said polymeric material, suitably wherein each unit III is the same. Preferably, a is in the range 45-100, more preferably in the range 45-55, especially in the range 48-52. Preferably, the sum of b and c is in the range 0-55, more preferably in the range 45-55, especially in the range 48-52. Preferably, the ratio of a to the sum of b and c is in the range 0.9 to 1.1 and, more preferably, is about 1. Suitably, the sum of a, b and c is at least 90, preferably at least 95, more preferably at least 99, especially about 100. Suitably b is at least 20, preferably at least 40, more preferably at least 45. Preferably, a is 20 or less, preferably 10 or less, more preferably 5 or less. Preferably, said polymeric material consists essentially of moieties I, II and/or III.

Said polymeric material may be a homopolymer having a repeat unit of general formula 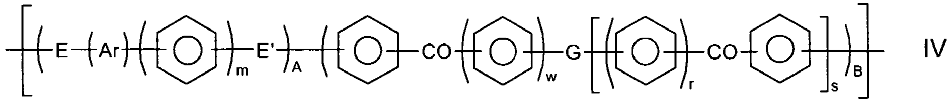 or a homopolymer having a repeat unit of general formula 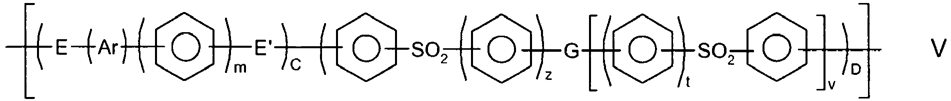 or a random or block copolymer of at least two different units of IV and/or V
wherein A, B, C and D independently represent 0 or 1 and E,E',G,Ar,m,r,s,t,v,w and z are as described in any statement herein.

Preferably, m is in the range 0-3, more preferably 0-2, especially 0-1. Preferably, r is in the range 0-3, more preferably 0-2, especially 0-1. Preferably t is in the range 0-3, more preferably 0-2, especially 0-1. Preferably, s is 0 or 1. Preferably v is 0 or 1. Preferably, w is 0 or 1. Preferably z is 0 or 1.

Preferably, said polymeric material is a homopolymer having a repeat unit of general formula IV.

Preferably Ar is selected from the following moieties (xi)** and (vii) to (x)

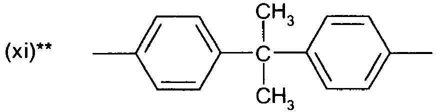

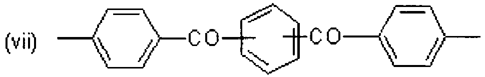

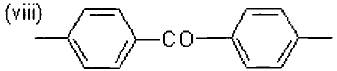

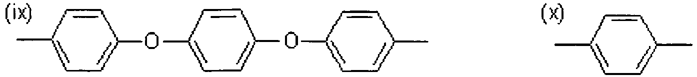

In (vii), the middle phenyl may be 1,4- or 1,3-substituted. It is preferably 1,4-substituted.

Suitable moieties Ar are moieties (i), (ii), (iii) and (iv) and, of these, moieties (i), (ii) and (iv) are preferred. Other preferred moieties Ar are moieties (vii), (viii), (ix) and (x) and, of these, moieties (vii), (viii) and (x) are especially preferred.

Said polymeric material suitably includes at least 60mole%, preferably at least 70mole%, more preferably at least 80mole%, especially at least 90mole% of repeat units which do not include -S- or -SO₂- moieties. Said polymeric material suitably includes at least 60mole%, preferably at least 70mole%, more preferably at least 80mole%, especially at least 90mole% of repeat units which consist essentially of phenyl moieties, ether moieties and ketone moieties.

An especially preferred class of polymeric materials are polymers (or copolymers) which consist essentially of phenyl moieties in conjunction with ketone and/or ether moieties. That is, in the preferred class, the polymeric material material does not include repeat units which include -S-,-SO₂- or aromatic groups other than phenyl. Preferred polymeric materials of the type described include:
(a) a polymer consisting essentially of units of formula IV wherein Ar represents moiety (iv), E and E' represent oxygen atoms, m represents 0, w represents 1, G represents a direct link, s represents 0, and A and B represent 1 (i.e. polyetheretherketone).
(b) a polymer consisting essentially of units of formula IV wherein E represents an oxygen atom, E' represents a direct link, Ar represents a moiety of structure (i), m represents 0, A represents 1, B represents 0 (i.e. polyetherketone);
(c) a polymer consisting essentially of units of formula IV wherein E represents an oxygen atom, Ar represents moiety (i), m represents 0, E' represents a direct link, A represents 1, B represents 0, (i.e. polyetherketoneketone).
(d) a polymer consisting essentially of units of formula IV wherein Ar represents moiety (i), E and E' represent oxygen atoms, G represents a direct link, m represents 0, w represents 1, r represents 0, s represents 1 and A and B represent 1. (i.e. polyetherketoneetherketoneketone).
(e) a polymer consisting essentially of units of formula IV, wherein Ar represents moiety (iv), E and E' represents oxygen atoms, G represents a direct link, m represents 0, w represents 0, s, r, A and B represent 1 (i.e. polyetheretherketoneketone).
(f) a polymer comprising units of formula IV, wherein Ar represents moiety (iv), E and E' represent oxygen atoms, m represents 1, w represents 1, A represents 1, B represents 1, r and s represent 0 and G represents a direct link (i.e. polyether-diphenyl-ether-phenyl-ketone-phenyl-).

The main peak of the melting endotherm (Tm) for said polymeric material may be at least 300°C.

Said polymeric material may consist essentially of one of units (a) to (f) defined above.

Said polymeric material preferably comprises, more preferably consists essentially of, a repeat unit of formula (XX) 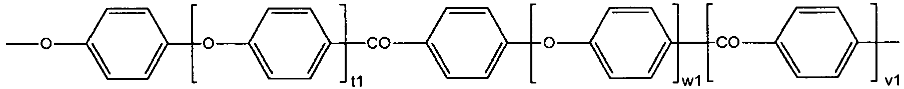 where t1, and w1 independently represent 0 or 1 and v1 represents 0, 1 or 2. Preferred polymeric materials have a said repeat unit wherein t1=1, v1=0 and w1=0; t1=0, v1=0 and w1=0; t1=0, w1=1, v1=2; or t1=0, v1=1 and w1=0. More preferred have t1=1, v1=0 and w1=0; or t1=0, v1=0 and w1=0. The most preferred has t1=1, v1=0 and w1=0.

In preferred embodiments, said polymeric material is selected from polyetheretherketone, polyetherketone, polyetherketoneetherketoneketone and polyetherketoneketone. In a more preferred embodiment, said polymeric material is selected from polyetherketone and polyetheretherketone. In an especially preferred embodiment, said polymeric material is polyetheretherketone.

Said polymeric material may be a part of a thermoplastic composition. Thus, said precursor selected in step (a) of the method may be made from and/or comprise a said thermoplastic composition. A said thermoplastic composition may include said polymeric material and one or more fillers.

Said thermoplastic polymeric material may make up at least 60wt%, suitably at least 70wt%, preferably at least 80wt%, more preferably at least 90wt%, especially at least 95wt%, of the total amount of thermoplastic polymeric materials in a thermoplastic composition from which the precursor of said article is made.

Said thermoplastic polymeric material is preferably substantially the only thermoplastic polymer in said thermoplastic composition. Suitably, a reference to a thermoplastic polymer refers to a polymer which is melted in the formation of said precursor of said article.

Said thermoplastic composition may include a filler means. A filler means is suitably a material which is not melted in the method. It suitably has a melting temperature of greater than 350°C.

Said filler means may include a fibrous filler or a non-fibrous filler. Said filler means may include both a fibrous filter and a non-fibrous filler.

A said fibrous filler may be continuous or discontinuous. In preferred embodiments a said fibrous filler is discontinuous.

A said fibrous filler may be selected from inorganic fibrous materials, non-melting and high-melting organic fibrous materials, such as aramid fibres, and carbon fibre.

A said fibrous filler may be selected from glass fiber, carbon fibre, asbestos fiber, silica fiber, alumina fiber, zirconia fiber, boron nitride fiber, silicon nitride fiber, boron fiber, fluorocarbon resin fibre and potassium titanate fiber. Preferred fibrous fillers are glass fibre and carbon fibre.

A fibrous filler may comprise nanofibres.

A said non-fibrous filler may be selected from mica, silica, talc, alumina, kaolin, calcium sulfate, calcium carbonate, titanium oxide, ferrite, clay, glass powder, zinc oxide, nickel carbonate, iron oxide, quartz powder, magnesium carbonate, fluorocarbon resin, graphite, polybenzimidazole (PBI), carbon powder, nanotubes and barium sulfate. The non-fibrous fillers may be introduced in the form of powder or flaky particles.

Preferably, said filler means comprises one or more fillers selected from glass fibre, carbon fibre, carbon black and a fluorocarbon resin. More preferably, said filler means comprises glass fibre or carbon, especially discontinuous, for example chopped, glass fibre or carbon fibre.

Said thermoplastic composition suitably includes 35-100 wt%, preferably 50-100 wt%, more preferably 65-100 wt% of said thermoplastic polymeric material.

Suitably, the total amount of filler means in said thermoplastic composition is 65wt% or less, or 60wt% or less. Said thermoplastic composition may include 0-65wt%, preferably 0-50wt%, more preferably 0-35wt% of filler means. Preferably, said thermoplastic composition includes less than 5wt% and, more preferably, includes substantially no filler means.

Said thermoplastic composition may include:
(i) 40-100wt% (suitably 60-100wt%, preferably 80-100wt%, more preferably 90-100wt%, especially 95-100wt%) of thermoplastic polymer(s); and
(ii) 0-60wt%, (suitably 0-40wt%, preferably 0-20wt%, more preferably 0-10wt%, especially 0-5wt%) of filler means.

Said thermoplastic composition may include:
(i) 35-100wt% of said thermoplastic polymeric material, preferably a polymer of formula (XX) referred to above.
(ii) 0-30wt% of a second thermoplastic polymeric material;
(iii) 0-65wt% of filler means;
(iv) 0-10wt% of other additives which may be selected, for example, from other polymers, processing aids, colours.

Suitably, said thermoplastic composition includes at least 80wt%, preferably at least 90wt%, more preferably at least 95wt%, especially at least 99wt% of said first polymer especially a polymer of formula (XX) referred to above.

According to a third aspect, there is provided an article which comprises a thermoplastic polymeric material according to claim 12 which has one or more of the following characteristics:
(A) substantially constant % crystallinity across the surface of the article;
(B) substantially no recovery of residual stress on reheating;
(C) No annealing peak detected using DSC on thermoplastic polymeric material derived from a surface of the article;
(D) Where the article comprises an extruded fibre filled polymeric material, the fibres are aligned predominantly along the axis of extrusion.

Characteristic (A) may be assessed by FTIR. Suitably, the surface of the article is sampled at a first location, a second location and a third location wherein the second location is spaced from the first location by a linear distance which is at least 50% of the maximum dimension of the article; and the third location is spaced from the first location by a linear distance which is at least 50% of the maximum dimension of the article. Further samples, for example a further 2, 4" 6, 8 or 10 samples, may be taken which may be spaced from the first location as aforesaid.

Characteristic (B) may be assessed by investigating whether the article deforms significantly on it being reheated to a temperature above the Tg of said thermoplastic polymeric material. The article preferably does not substantially deform when heated 25°C above the Tg. It preferably does not substantially deform when heated 50°C above the Tg. It preferably does not substantially deform when heated 75°C above the Tg. It preferably does not substantially deform when heated 90°C above the Tg.

Whether the article deforms may be assessed visually. Alternatively and/or additionally, a maximum dimension (e.g. length) of the article may be measured before and after reheating as aforesaid. If the maximum dimension varies by more than 2% (i.e. if the max dimension after less the max dimension before)/max dimension before, is more than 2%), then the article is deemed to have deformed. In preferred embodiments, said maximum dimension varies by less than 1%, measured as aforesaid. Suitably, in the aforementioned assessment the maximum dimension is measured at the same temperature, before and after reheating. For example the dimensions may be measured when the article is at ambient temperature.

In assessing characteristic (C), a sample may be taken from a surface by microtoming and the presence or absence of an annealing peak established in accordance with procedures known to a skilled person.

An article of the third aspect may exhibit at least two, preferably at least three, more preferably each of said characteristics.

Characteristic (C) may apply in particular to a scroll, for example of a scroll compressor.

Said article of the third aspect may include a helical shape, a split ring or comprise a micro-chip receptacle, for example tray.

Any feature of any aspect of any invention or embodiment described herein may be combined with any feature of any aspect of any other invention or embodiment described herein mutatis mutandis.

Specific embodiments of the invention will now be described, by way of example.

Manufacture of items such as seal rings, scrolls for scroll compressors and micro-chip trays from polymeric materials may be undertaken to minimise the risk that the shape and/or dimensions of such items may detrimentally change in use when subjected to heat and/or stress. In this regard, in general terms, such components may be manufactured using the following process steps:
(i) Forming a component from a polymeric material under conditions which seek to limit the degree of crystallinity generated. The aim is to manufacture the component with the lowest level of crystallinity attainable. The step may involve cooling the component rapidly after its moulding to limit the crystallinity generated.
(ii) Constraining the component to the desired shape, for example using a jig.
(iii) With the component constrained, heating the component to a sufficiently high temperature (e.g. treating the component by heating above the Tg of the polymeric material) to increase, as much as possible, the level of crystallinity in the component. The closer the temperature is to the crystalline melting point for the polymeric material, the faster the crystallisation process will occur and the higher the degree of crystallinity that will be achieved. Ideally, the temperature should be higher than the end-use temperature of the component to ensure no further crystallisation occurs in use. Heating as aforesaid results in the constrained shape being locked into the component by the crystalline structure such that the constrained shape of the component becomes its "normal" shape. As a result, deformation of the component and/or heating above its Tg does not remove this "memory" and the component retains the shape set into it by the crystallisation process.

The aforementioned general process may be applied to a seal ring. In this regard, a seal ring (which has a split ring configuration) is made from a polymeric material, for example polyetheretherketone, by injection moulding. However, to limit the crystallinity in the ring it is moulded into a cold moulding tool, to solidify the polymer before significant crystallisation can occur. The temperature of the tool should be as low as possible. In general the tool temperature should be below the Tg of the polymeric material, suitably at least 25°C, preferably at least 50°C or at least 100°C below the Tg of the polymeric material. The ring is removed from the tool and mounted inside a housing jig which is arranged to constrain and/or apply a force to the ring to maintain it in a desired shape. The temperature of the jig and ring is then increased above the Tg of the polymeric material so that crystallisation occurs. The time for this will depend on the temperature used - shorter times may be used if higher temperatures are used. By way of example, the temperature may be 250°C and this may be maintained for at least 30 minutes once the ring has reached the temperature up to a maximum of one hour. In addition, the thicker the component, the longer the time. The component is preferably constrained in the jig until it has cooled to a temperature below the Tg of the polymeric material. The increased crystallinity in the ring locks in the desired shape of the ring so that, on removal from the jig, the shape and/or dimensions of the ring are fixed. When the ring is opened to allow it to be mounted on a shaft, there is no resulting permanent deformation as a consequence of the mounting process, and, accordingly, the ring is a good fit in the final engineering assembly in which it may be used.

The general process may be applied to scrolls for scroll compressors, for example even to manufacture long scrolls of small cross-section which are difficult to manufacture using existing processes. In the process, a required scroll profile (a relatively complex scroll profile may be produced if required) is extruded from a polymeric material, for example polyetheretherketone, and is quenched into a cold water bath to limit the level of crystallinity produced. The extrusion process produces a uniform product with low residual stress unlike the known injection moulding process. If polymer composition comprising polymeric material and fibres is extruded, the fibre orientation produced by the extrusion process would be along the length of the extrudate, this being the ideal orientation for the final scroll. The extruded profile is cut to length, formed into a tool which has the desired scroll profile machined into it and heat treated to above the Tg of the polymeric material so that crystallisation occurs which locks the scroll into the desired shape. Again, the time will depend on temperatures used and component thickness and may be as described above for the seal ring.

The general process may be applied to other components which may be liable to warpage in use, for example microchips trays. In the process, a chip tray may be moulded from a polymeric material, for example polyetheretherketone, in a cold injection moulding tool to limit the amount of crystallinity in the tray. The tray may then be constrained in a planar clamping jig and heated above the Tg of the polymeric material so that crystallisation occurs. The resulting tray will be flat and will retain the flatness in use, for example if used in conjunction with chip processing in lead-free solder baths.

To further illustrate the aforementioned general procedures, samples of 30µm polyetheretherketone film having a low level of crystallinity (12%) were tested as described in Examples 1 to 7. The level of crystallinity was measured using DSC, unless otherwise stated.

### Example 1

Samples of the film were wound onto a steel bar, approximately 25mm in diameter. They were heated in an oven at 250°C for 30 minutes and allowed to cool slowly in the oven. Following removal from the oven, the film formed a tight roll which, when opened out and released, immediately recoiled. The level of crystallinity in the samples, as measured using DSC, was found to be 36%.

### Example 2

The coil of Example 1 was heat treated at 250°C for 30 minutes. No dimensional change of the coil, compared to that produced in Example 1, was observed.

### Example 3

A sample of film from Example 1 was uncoiled and placed between two steel plates so that it was constrained in a flat condition. The sample was thermally treated in an oven at 200°C for 30 minutes and allowed to cool slowly prior to removal from between the two steel plates. The film was found no longer to recoil.

### Example 4

The sample produced in Example 3 was placed back in the oven and reheated to 230°C without any constraint being placed on the material. The result was that the film recoiled into a coil of the same dimensions as that produced in Example 1.

Examples 1 and 2 show that heating and developing a higher level of crystallinity whilst the sample is constrained results in retention of the shape. It is possible subsequently to thermoform the material (which is processing relating to the amorphous content of the polymer) to reset the shape to form a flat sample as illustrated by example 3; however, from example 4, it is clear that the preferred shape of the film is the coil shape since heating above the Tg allows the frozen in stress, developed during Example 3, to relax out and the film to assume its preferred form of a coil. It should be noted that Examples 3 and 4 are carried out at temperatures below that used in Example 1 since, if they were carried out above the Example 1 temperature, a change in crystallinity could be induced.

### Example 5

A sample of film was placed between steel plates and heated to 200°C for 30 minutes and allowed to cool slowly whilst still being constrained. The resulting sample was flat in form and had a crystallinity of 32%, this being regarded as a normal level of crystallinity in a typical injection moulded sample.

### Example 6

The sample produced in Example 5 was wound round a steel mandrel and the sample underwent further heating at 250°C for 30 minutes, the sample being allowed to cool in the oven. The resulting sample had a coiled form but the diameter of the coil was greater than that of the samples crystallised directly (i,e. the Example 1 sample) and significantly bigger than the steel bar. The resulting shape was related in part to the thermoforming process but also to some subsequent crystallisation in heat treating the sample at a higher temperature. The crystallinity of the sample following heat treatment at 250°C was 36%.

### Example 7

The sample produced in Example 6 was reheated in an oven to 250°C for 30 minutes without the shape being constrained. The result was that the coil diameter increased although the sample did not return to its original flat shape.

The process of Example 6 resulted in a film that was not permanently set to the dimensions of two steel bar unlike the situation with the film of Example 1, this being due to the greater increase in the level of crystallinity occurring during the shaping process of Example 1 (24% increase in crystallinity) compared to that of Example 6 (4% increase in crystallinity).

Components which have been made from PEEK in accordance with the general process described herein, for example as set forth in Example 1, may be characterised and/or distinguished from components made by prior art processes based on the following:

### Crystallinity at surface of product

The prior art recommendation for injection moulding of PEEK is to use a tool temperature in excess of 160°C, this elevated temperature allowing sufficient time for the PEEK to crystallise. Such tool temperatures would be expected to generate bulk crystallinity levels of 25-35% depending on the exact tool temperature and component thickness.

If sections of the tool are all at the same temperature then one would expect the surface crystallinity in the product to be the same. If the sections of the tool are at different temperatures then one would expect different degrees of surface crystallinity in the product. In general due to the positioning of the cooling channels within a tool, local temperature variations on the tool surface exist and thus the degree of crystallinity across the surface varies even if the tool is, in principle, all set to the same temperature.

In contrast, in accordance with the process described herein, the degree of crystallinity across the surface should be substantially constant. This arises because the surface layer will have been crystallised under exactly the same conditions and will not be subject to such effects as hot-spots in the mould tooling. There may be temperature variations across the tool face but the tool will be cold enough to bring about the formation of a skin with a very low degree of crystallinity and thus there will be no *crystalline* constraints on the subsequent crystallisation process.

Localised analysis of the degree of crystallinity can be carried out using FTIR, linked with a microscope attachment, followed by the analysis of:
1. The ratio of the IR absorbance at 1305 cm⁻¹ as compared with that at 1280 cm⁻¹.
2. The ratio of the IR absorbance at 970 cm⁻¹ as compared with that at 952 cm⁻¹.

### (b) Recovering of residual stress on reheating

In the case of components such as seal rings, once they have been produced using the prior art process, a heat setting stage is required to define the final shape. In the case of such a component, on re-heating the component to a temperature above the Tg, the residual stress built in by the heating process will relieve itself and the component will revert to a shape similar to the as-manufactured shape. Any change in crystallinity during this stage would be negligible or very low. Consequently, by virtue of the recovery of the residual stress, the component will deform. In contrast, in accordance with the process described herein which involves crystallising the material when constrained so that the crystallisation process locks the component in the desired shape to which it is constrained, substantially no deformation or recovery of residual stress is observed on re-heating the component above the Tg but below the temperature to which the component had been heated when constrained.

### (c) Detection of an annealing peak

When prior art components are annealed (which they often are), an "annealing" peak is observed when the material is tested using DSC. This peak is an endotherm related to the melting of the some of the crystalline regions formed during the annealing process. The melting temperature of the regions is less than that of the bulk of the crystalline network due to the presence of other stresses which assist the process of crystal destruction. This annealing peak is usually evident at around 20°C above the temperature at which the component has been annealed. The annealing peak is usually a very distinct feature of the DSC trace.

In the case of a component made in accordance with the process described herein, the material of the component will not exhibit an annealing peak as the crystalline structures are primary structures rather than the secondary structures normally formed in the annealing process. Thus, they are not subject to the stresses found within an annealed sample that has been made using the prior art process. However, in relatively thick components made using the process described herein, small annealing peaks may be present due to the degree of crystallinity present in the centre of the section of the component. However, samples of the component taken from its surface will not exhibit an annealing peak. Samples can be generated from the surface layers using techniques such as microtoming.

### (d) Filler Orientation

In the case of scrolls, the prior art process involves injection moulding fibre filled polymeric material. This will produce a fibre orientation pattern which varies along the length of the component. The cross-section of a fibre-filled injection moulded components exhibits a skin/core structure, the fibres in the outer skin layers being predominantly aligned with the direction of flow whilst those in the central core are aligned predominantly transverse to the flow. Due to the nature of the filling process, the relative thickness of the skin and core layers would be expected to vary along the length of the moulded component. However, when a scroll is made as described herein then the fibres would be expected to be lined predominantly along the axis of extrusion and the fibre orientation pattern would not be expected to change along the length of the component.

Whilst the process described may be used to make a range of different types of components, it may be particularly advantageously used to overcome manufacturing issues where the geometry of the component creates difficulties, for example because the component cannot be either directly injection moulded or machined.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of forming at least a part of an article in a predetermined shape comprising:
(a) selecting a precursor of said article, wherein said precursor comprises a thermoplastic polymeric material having a first level of crystallinity wherein said first level of crystallinity is less than 20% and wherein said thermoplastic polymeric material comprises a repeat unit of formula (XX) 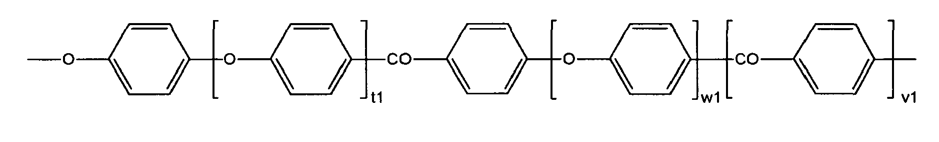 where t1 and w1 independently represent 0 or 1 and v1 represents 0, 1 or 2;
(b) applying a force to the precursor to restrict at least a part of said precursor to said predetermined shape;
(c) causing the crystallinity of the thermoplastic material of at least said part of said article to increase by more than 15%.

2. A method according to claim 1, wherein crystallinity increases by at least 20% in step (c).

3. A method according to claim 1 or claim 2, wherein said first level of crystallinity of the precursor selected in step (a) is at least 5% and is less than 18%.

4. A method according to any preceding claim, wherein the shape of the precursor and said predetermined shape are the same.

5. A method according to any of claims 1 to 3, where the shape of the precursor and said predetermined shape are different.

6. A method according to any preceding claim, wherein said article comprises a helical shape, a split ring or a microchip receptacle.

7. A method according to any preceding claim, wherein step (c) comprises heating said thermoplastic polymeric material and/or said precursor to a temperature above the glass transition temperature (Tg) of said thermoplastic polymeric material, wherein, in step (c), said thermoplastic polymeric material and/or said precursor are heated to a temperature less than the melting temperature (Tm) and degradation temperature of said thermoplastic polymeric material and/or said precursor.

8. A method according to any preceding claim, wherein step (c) comprises heating said thermoplastic polymeric material to a temperature of at least 20°C above the glass transition temperature (Tg) of said thermoplastic polymeric material.

9. A method according to any preceding claim, wherein step (c) includes slow cooling of the thermoplastic polymeric material and/or said precursor whilst said at least a part of said precursor is restricted to said predetermined shape.

10. A method according to any preceding claim, wherein t1 = 1, v1 = 0 and w1 = 0.

11. A method according to any preceding claim, wherein said thermoplastic composition includes:
(i) 35-100wt% of said thermoplastic polymeric material of formula (XX);
(ii) 0-30wt% of a second thermoplastic polymeric material;
(iii) 0-65wt% of filler means;
(iv) 0-10wt% of other additives.

12. An article which comprises a thermoplastic polymeric material which comprises a repeat unit of formula (XX) 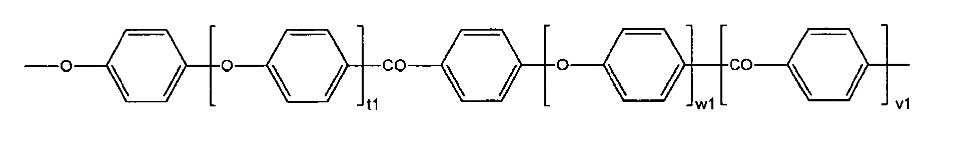 where t1 and w1 independently represent 0 or 1 and v1 represents 0, 1 or 2, said thermoplastic polymeric material having at least three of the following characteristics:
(A) substantially constant % crystallinity across the surface of the article;
(B) substantially no recovery of residual stress on reheating;
(C) no annealing peak detected using Differential Scanning Calorimetry (DSC) on thermoplastic polymeric material derived from a surface of the article;
(D) where the article comprises an extruded fibre filled polymeric material, the fibres are aligned predominantly along the axis of extrusion.

13. An article according to claim 11 or claim 12, wherein said article is selected from a helical shape, a split ring or comprises a microchip receptacle.

14. An article according to claim 12 or claim 13, wherein t1 = 1, v1 = 0 and w1 = 0.

## Patentansprüche

1. Verfahren zum Herstellen von wenigstens einem Teil eines Gegenstands in einer vorbestimmten Form, umfassend:
(a) Auswählen eines Vorläufers des Gegenstands, wobei der Vorläufer ein thermoplastisches Polymermaterial umfasst, das einen ersten Kristallinitätsgrad aufweist, wobei der erste Kristallinitätsgrad weniger als 20 % beträgt und wobei das thermoplastische Polymermaterial eine Wiederholungseinheit der Formel (XX) umfasst, 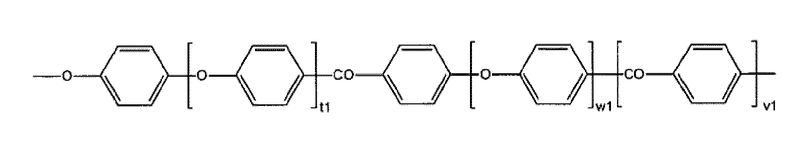 wobei t1 und w1 unabhängig 0 oder 1 darstellen und v1 0, 1 oder 2 darstellt;
(b) Anwenden einer Kraft auf den Vorläufer, um wenigstens einen Teil des Vorläufers auf die vorbestimmte Form zu beschränken;
(c) Bewirken, dass die Kristallinität des thermoplastischen Materials des wenigstens einen Teils des Gegenstands um mehr als 15 % zunimmt.

2. Verfahren gemäß Anspruch 1, wobei die Kristallinität bei Schritt (c) um wenigstens 20 % zunimmt.

3. Verfahren gemäß Anspruch 1 oder Anspruch 2, wobei der erste Kristallinitätsgrad des bei Schritt (a) gewählten Vorläufers wenigstens 5 % beträgt und weniger als 18 % beträgt.

4. Verfahren gemäß einem der vorstehenden Ansprüche, wobei die Form des Vorläufers und die vorbestimmte Form gleich sind.

5. Verfahren gemäß einem der Ansprüche 1 bis 3, wobei die Form des Vorläufers und die vorbestimmte Form verschieden sind.

6. Verfahren gemäß einem der vorstehenden Ansprüche, wobei der Gegenstand eine helikale Form, einen Spaltring oder eine Mikrochip-Aufnahme umfasst.

7. Verfahren gemäß einem der vorstehenden Ansprüche, wobei Schritt (c) Erwärmen des thermoplastischen Polymermaterials und/oder des Vorläufers auf eine Temperatur über der Glasübergangstemperatur (Tg) des thermoplastischen Polymermaterials umfasst, wobei bei Schritt (c) das thermoplastische Polymermaterial und/oder der Vorläufer auf eine Temperatur von kleiner als die Schmelztemperatur (Tm) und die Zersetzungstemperatur des thermoplastischen Polymermaterials und/oder des Vorläufers erwärmt wird.

8. Verfahren gemäß einem der vorstehenden Ansprüche, wobei Schritt (c) Erwärmen des thermoplastischen Polymermaterials auf eine Temperatur von wenigstens 20 °C über der Glasübergangstemperatur (Tg) des thermoplastischen Polymermaterials umfasst.

9. Verfahren gemäß einem der vorstehenden Ansprüche, wobei Schritt (c) langsames Abkühlen des thermoplastischen Polymermaterials und/oder des Vorläufers, wobei der wenigstens eine Teil des Vorläufers auf die vorbestimmte Vorm eingeschränkt ist, umfasst.

10. Verfahren gemäß einem der vorstehenden Ansprüche, wobei t1 = 1, v1 = 0 und w1 = 0.

11. Verfahren gemäß einem der vorstehenden Ansprüche, wobei die thermoplastische Zusammensetzung umfasst:
(i) 35-100 Gew.-% an dem thermoplastischen Polymermaterial der Formel (XX);
(ii) 0-30 Gew.-% an einem zweiten thermoplastischen Polymermaterial;
(iii) 0-65 Gew.-% an Füllmitteln;
(iv) 0-10 Gew.-% an anderen Zusatzstoffen.

12. Gegenstand, der ein thermoplastisches Polymermaterial umfasst, das eine Wiederholungseinheit der Formel (XX) umfasst, 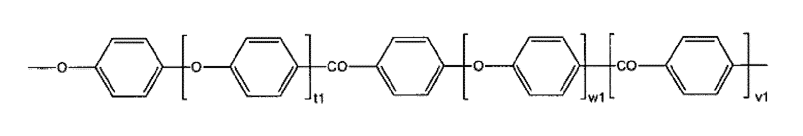 wobei t1 und w1 unabhängig 0 oder 1 darstellen und v1 0, 1 oder 2 darstellt, wobei das thermoplastische Polymermaterial wenigstens drei der folgenden Merkmale aufweist:
(A) eine im Wesentlichen konstante %-Kristallinität über die Oberfläche des Gegenstands;
(B) im Wesentlichen kein Abbau von Restspannung bei Wiedererwärmen;
(C) kein Tempermaximum unter Verwendung von Differentialscanning-Kalorimetrie (DSC) bei thermoplastischem Polymermaterial, das von einer Oberfläche des Gegenstands stammt, gemessen;
(D) wenn der Gegenstand ein extrudiertes fasergefülltes Polymermaterial umfasst, sind die Fasern überwiegend entlang der Extrusionsachse ausgerichtet.

13. Gegenstand gemäß Anspruch 12, wobei der Gegenstand ausgewählt ist aus einer helikalen Form, einem Spaltring oder eine Mikrochip-Aufnahme umfasst.

14. Gegenstand gemäß Anspruch 12 oder Anspruch 13, wobei t1 = 1, v1 = 0 und w1 =0.

## Revendications

1. Procédé de formation d'au moins une partie d'un article avec une forme prédéterminée, comprenant :
(a) la sélection d'un précurseur dudit article, ledit précurseur comprenant un matériau polymère thermoplastique ayant un premier niveau de cristallinité, ledit premier niveau de cristallinité étant inférieur à 20 %, et ledit matériau polymère thermoplastique comprenant un motif répétitif de formule (XX) 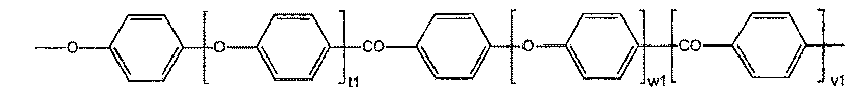 où t1 et w1 représentent indépendamment 0 ou 1 et v1 représente 0, 1 ou 2 ;
(b) l'application d'une force au précurseur pour confiner au moins une partie dudit précurseur à ladite forme prédéterminée ;
(c) l'augmentation de la cristallinité du matériau thermoplastique au moins de ladite partie dudit article de plus de 15 %.

2. Procédé selon la revendication 1, dans lequel la cristallinité augmente d'au moins 20 % à l'étape (c).

3. Procédé selon la revendication 1 ou la revendication 2, dans lequel ledit premier niveau de cristallinité du précurseur sélectionné à l'étape (a) est d'au moins 5 % et est inférieur à 18 %.

4. Procédé selon l'une quelconque des revendications précédentes, dans lequel la forme du précurseur et ladite forme prédéterminée sont identiques.

5. Procédé selon l'une quelconque des revendications 1 à 3, dans lequel la forme du précurseur et ladite forme prédéterminée sont différentes.

6. Procédé selon l'une quelconque des revendications précédentes, dans lequel ledit article comprend une forme hélicoïdale, un anneau fendu ou un réceptacle pour puce.

7. Procédé selon l'une quelconque des revendications précédentes, dans lequel l'étape (c) comprend le chauffage dudit matériau polymère thermoplastique et/ou dudit précurseur jusqu'à une température supérieure à la température de transition vitreuse (Tg) dudit matériau polymère thermoplastique, et dans lequel, à l'étape (c), ledit matériau polymère thermoplastique et/ou ledit précurseur sont chauffés jusqu'à une température inférieure à la température de fusion (Tm) et la température de dégradation dudit matériau polymère thermoplastique et/ou dudit précurseur.

8. Procédé selon l'une quelconque des revendications précédentes, dans lequel l'étape (c) comprend le chauffage dudit matériau polymère thermoplastique jusqu'à une température supérieure d'au moins 20 °C à la température de transition vitreuse (Tg) dudit matériau polymère thermoplastique.

9. Procédé selon l'une quelconque des revendications précédentes, dans lequel l'étape (c) comprend le lent refroidissement du matériau polymère thermoplastique et/ou dudit précurseur pendant que ladite au moins une partie dudit précurseur est confinée à ladite forme prédéterminée.

10. Procédé selon l'une quelconque des revendications précédentes, dans lequel t1 vaut 1, v1 vaut 0 et w1 vaut 0.

11. Procédé selon l'une quelconque des revendications précédentes, dans lequel ladite composition thermoplastique comprend :
(i) 35-100 % en poids dudit matériau polymère thermoplastique de formule (XX) ;
(ii) 0-30 % en poids d'un deuxième matériau polymère thermoplastique ;
(iii) 0-65 % en poids de moyens de charge ;
(iv) 0-10 % en poids d'autres additifs.

12. Article qui comprend un matériau polymère thermoplastique qui comprend un motif répétitif de formule (XX) 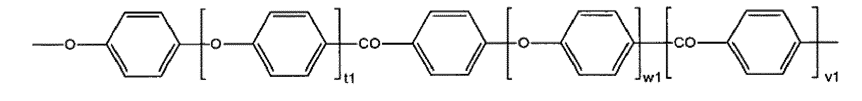 où t1 et w1 représentent indépendamment 0 ou 1 et v1 représente 0, 1 ou 2, ledit matériau polymère thermoplastique ayant au moins trois des caractéristiques suivantes :
(A) un pourcentage de cristallinité sensiblement constant sur toute la surface de l'article ;
(B) pratiquement aucun rétablissement de contraintes résiduelles au réchauffage ;
(C) aucun pic de recuit détecté par calorimétrie différentielle à balayage (DSC) sur le matériau polymère thermoplastique provenant d'une surface de l'article ;
(D) quand l'article comprend un matériau polymère chargé de fibres extrudées, les fibres sont alignées principalement le long de l'axe d'extrusion.

13. Article selon la revendication 12, ledit article étant choisi parmi une forme hélicoïdale et un anneau fendu ou comprenant un réceptacle pour puce.

14. Article selon la revendication 12 ou la revendication 13, dans lequel t1 vaut 1, v1 vaut 0 et w1 vaut 0.
